# FASCICULE DE BREVET EUROPEEN

(11) **EP 2 766 669 B1**
(45) Date de publication et mention de la délivrance du brevet: **18.04.2018**
(21) Numéro de dépôt: 12781052.1
(22) Date de dépôt: 11.10.2012
(51) Int. Cl.: B60H 1/22, F24H 1/00, H05B 3/26, F24H 3/04, F24H 9/18, H05B 3/00

(54) **MODULE DE CHAUFFE ISOLÉ POUR DISPOSITIF DE CHAUFFAGE ADDITIONNEL**
ISOLIERTES HEIZMODUL FÜR ZUSÄTZLICHES HEIZMITTEL
INSULATED HEATING MODULE FOR ADDITIONAL HEATING DEVICE

(30) Priorité: 14.10.2011 FR 1103148
(43) Date de publication de la demande: 20.08.2014
(73) Titulaire: Valeo Systemes Thermiques, 78320 Le Mesnil Saint Denis (FR)
(72) Inventeur: GATINOIS, Jean, 78760 Jouars Pontchartrain (FR); DERVELOY, Pierre, 78180 Montigny le bretonneux (FR); TELLIER, Laurent, 75116 Paris (FR)
(74) Mandataire: Tran, Chi-Hai
(86) Numéro de dépôt international: PCT/EP2012/070139
(87) Numéro de publication internationale: WO 2013/053807

(56) Documents cités:
- EP-A1- 1 839 920
- EP-A1- 1 926 347
- EP-A1- 2 292 455
- EP-A2- 0 368 206
- FR-A1- 2 855 933
- US-A- 5 326 418

## Description

La présente invention concerne le domaine des radiateurs additionnels de chauffage, notamment pour des installations de chauffage, ventilation et/ou climatisation d'habitacle de véhicules automobiles (HVAC).
Lorsque les températures extérieures sont basses, et particulièrement en hiver, il s'écoule un certain temps entre le moment où la voiture démarre et le moment où de l'air chaud puisse sortir des buses d'aération/dégivrage. En cause, le temps de montée en température du fluide du circuit de refroidissement du moteur thermique de la voiture qui sert à réchauffer l'air de l'habitacle par le biais d'un radiateur de chauffage. Pour remédier à cet inconvénient, il a été proposé d'installer en complément du radiateur de chauffage thermique un dispositif de chauffage additionnel électriques, alimentés par une source électrique du véhicule, permettant de réchauffer beaucoup plus rapidement l'air traversant ce dispositif de chauffage additionnel électrique.
Il est connu des dispositifs de chauffage additionnel électrique, constitués d'un assemblage de plusieurs modules de chauffe, composés d'au moins un barreau dissipateur de chaleur et isolés par un assemblage particulier de composants entre les résistances, les électrodes et les dissipateurs de chaleur, chaque module étant entouré par un cadre de montage, telle que le décrit la demande de brevet WO2006073264. Le document US 5 326 418 montre le préambule de la revendication 1. Cependant, ces solutions ont comme désavantage de nécessiter un assemblage d'un nombre de composants importants, ce qui implique des contraintes d'ajustement très précises, un ordre d'assemblage rigoureux et, par conséquent, un coût final important.
Un autre inconvénient connu de ces montages concerne l'isolation extérieure des dispositifs de chauffage additionnels. En effet, il existe un point faible entre les phases positive et négative d'un même module de chauffe constitué de deux barreaux dissipateurs de chaleurs, ou entre deux barreaux des différentes phases. Cela signifie que si une pièce métallique ou conductrice d'électricité atteignait le dispositif de chauffage, cette pièce métallique pourrait créer un court-circuit qui nuirait au bon fonctionnement du circuit électrique du véhicule.
De plus, les montages de dispositifs additionnels de chauffage présentent dans le plupart des cas un assemblage de plusieurs modules de chauffe avec cinq phases: trois positives et deux négatives. Cet assemblage présente des limites, car les charges sont différentes entre les phases, ce qui crée un comportement thermique inégal et oblige les fabricants de modules de chauffe à contrôler très précisément les tensions de chaque module de chauffe par rapport aux autres, ce qui rend plus difficile le processus de production.
Comme pour tout dispositif électrique, les éléments constitutifs se doivent d'être en partie isolés afin de palier d'éventuels court circuits mais aussi pour assurer un bon fonctionnement et une sécurité optimale.
Le but de la présente invention est de pallier les inconvénients de l'art antérieur relevés ci-dessus.

A cet effet, l'invention propose un module de chauffe selon la revendication 1. Un tel module, du fait de son isolation au moins partielle, assure un chauffage rapide de l'habitacle de façon sûre et fiable en terme de sécurité, car le risque de court circuit est éliminé.
Selon un mode de réalisation de l'invention, le module de chauffe est composé de deux barreaux conducteurs de chaleur séparés par une résistance,de préférence, constituée par au moins un élément résistant à coefficient de température positif (CTP). De tels éléments résistants CTP utilisés comme élément de génération thermique se distinguent par le fait que plus la température de l'élément est élevée plus sa résistance électrique augmente. Un phénomène d'autorégulation est donc créé.
Avantageusement, chaque barreau conducteur de chaleur est constitué d'un intercalaire pris en sandwich entre une électrode et une plaque.

En particulier, les éléments résistants peuvent être fixés aux barreaux conducteurs de chaleur par collage.

Dans un tel cas, le collage sera assuré par une colle avantageusement de type conductrice d'énergie électrique.

Selon un premier mode de réalisation, les plaques sont disposées de part et d'autre de l'élément résistant et en contact avec celui ci.

Dans un deuxième mode de réalisation, les électrodes des deux barreaux respectifs sont en contact direct avec l'élément résistant.

L'électrode est constituée, de préférence, d'au moins une connectique qui sert à transmettre l'énergie électrique au module de chauffe.

De manière préférentielle, et pour des raisons de conductivité et de poids, les composants du barreau conducteur de chaleur, tels que au moins l'électrode, les intercalaires, la plaque et/ou la connectique, sont en aluminium.

Le module de chauffe, après montage, peut alors être isolé électriquement de tout élément extérieur par la pose, de préférence par pulvérisation, d'un revêtement isolant, idéalement en polyester. Pour une isolation optimale, le dépôt de revêtement isolant doit être compris entre une épaisseur de 20 à 120µm.

Le dispositif de chauffage additionnel est composé d'un nombre défini de modules de chauffe. Chaque module étant alimenté séparément, le cadre ne sert plus que de maintien en position de ces modules pour le bon fonctionnement du chauffage additionnel.

Globalement, selon la présente invention, le dispositif de chauffage additionnel de l'habitacle de véhicules automobiles, selon la présente invention, permet d'assurer un chauffage, rapide, fiable et sûr.

L'assemblage particulier du module de chauffe tel que présenté précédemment permet de ne pas avoir de phénomènes de déséquilibre thermique entre les différentes phases. Chaque module de chauffe est équipée d'une ligne de résistance. Ainsi, en additionnant les modules de chauffe les uns après les autres et du fait qu'ils sont intrinsèquement isolés, on obtiendra un même niveau de courant dans les lignes.

De plus, le problème de court circuit est supprimé, car les modules de chauffe étant isolés, aucun moyen ne peut perturber le bon fonctionnement du dispositif de chauffage additionnel.

D'autres avantages et particularités de l'invention ressortent de la description de modes de réalisation faite ci-après en référence aux dessins annexés dans lesquels :
- La figure 1 est une vue en perspective d'un barreau conducteur de chaleur selon un premier mode de réalisation de la présente invention;
- La figure 2 est une vue en perspective d'un module de chauffe selon la présente invention ;
- La figure 3 est une vue de détail en perspective d'une première extrémité du barreau conducteur de chaleur de la figure 1 ;
- La figure 4a est une vue de détail en perspective d'une deuxième extrémité du barreau conducteur de chaleur de la figure 1 ;
- La figure 4b est une vue de détail de la figure 4a d'un intercalaire du barreau conducteur de chaleur de la figure1.
- La figure 5 est une vue de face selon un premier mode de réalisation de la présente invention;
- La figure 6 est une vue de face selon un deuxième mode de réalisation de la présente invention; et
- La figure 7 est une vue en perspective d'un dispositif de chauffage additionnel selon la présente invention.
- La figure 8 est une vue de détail de la figure 5, et
- La figure 9 est une vue de détail d'une partie de la figure 6.

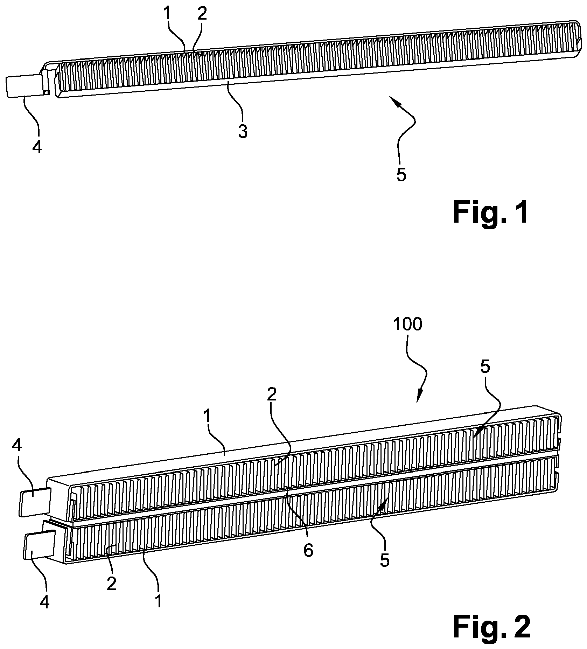

En se reportant à la figure 1, la figure illustre en détail un barreau conducteur de chaleur 5. Le barreau conducteur de chaleur 5 comprend un intercalaire 2, une électrode 1 et une plaque 3. L'intercalaire 2 est en contact avec l'électrode 1 et la plaque 3. L'intercalaire 2 se présente sous la forme d'une feuille métallique ondulée, avantageusement en aluminium ou en alliage d'aluminium. L'ondulation de la feuille métallique est obtenue par pliage ou par passage de la feuille entre des roues de formage. La feuille métallique ondulée présente ainsi une forme en zigzag. Cette forme particulière créé ainsi des sommets 9 étant les parties courbes de la feuille métallique ondulée en contact direct avec alternativement l'électrode 1 et la plaque 3

La plaque 3 assure le contact électrique entre l'électrode 1 et un élément résistant 6 via l'intercalaire 2 et le contact thermique entre l'intercalaire 2 et l'élément résistant 6. La plaque 3 est préférentiellement en aluminium ou alliage d'aluminium. Elle est de forme générale plane à l'exception de ses extrémités. La portion plane est en contact électrique et thermique avec les sommets 9 de l'intercalaire 2.

L'élément résistant 6 est avantageusement une résistance à coefficient de température positif (CTP). L'élément résistant 6 dégage de la chaleur lorsqu'un courant électrique le traverse. L'élément à coefficient de température positif a la particularité de s'autoréguler, c'est-à-dire que plus la température de l'élément est élevée plus sa résistance électrique augmente, ce qui évite tout risque de surchauffe.

L'intercalaire 2 permet de dissiper la chaleur produite par l'élément résistant 6 par un échange avec un flux d'air traversant le barreau conducteur de chaleur 5.

L'électrode 1 est une bande métallique 12 en contact avec l'intercalaire 2 et possède, à une extrémité, une terminaison 4 qui assure la connexion électrique entre l'élément résistant 6 et l'énergie électrique générée par le véhicule. L'électrode 1 est de préférence en aluminium ou en alliage d'aluminium. De même, la terminaison 4 est, de préférence en aluminium ou en alliage d'aluminium.

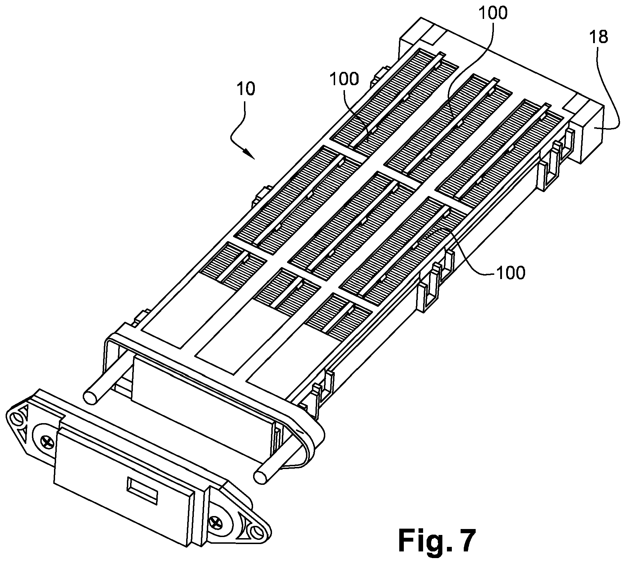

Sur la figure 2 est représenté un module de chauffe 100 selon l'invention. Un tel module de chauffe 100 est localisé à l'intérieur d'un dispositif de chauffage électrique 10, présenté sur la figure 7, comprenant une pluralité de modules de chauffe 100. Un tel dispositif de chauffage électrique 10 est installé à l'intérieur d'un système de chauffage, ventilation et/ou climatisation d'un véhicule automobile pour produire un flux d'air chaud apte à être distribué dans l'habitacle, en particulier dès les premiers instants de fonctionnement du véhicule.

Le module de chauffe 100 comprend, au moins un élément résistant 6 et deux barreaux conducteurs de chaleur 5. L'élément résistant 6, est collé aux barreaux conducteurs de chaleur 5.

Les deux barreaux conducteurs de chaleur 5 sont disposés de part et d'autre de l'élément résistant 6. De cette manière, les deux barreaux conducteurs de chaleur 5 sont posés chacun sur une grande face des éléments résistants 6. On entend par grande face, la face présentant la plus grande des dimensions des éléments résistants CTP.

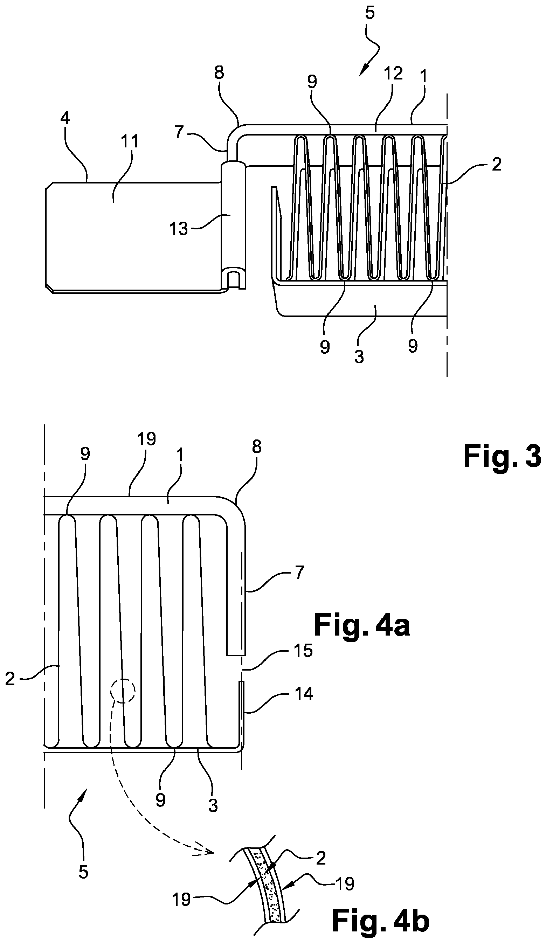

Sur la figure 3, est représentée une des extrémités du barreau conducteur de chaleur 5 et, en particulier l'extrémité assurant la connexion électrique du module de chauffe 100 au réseau électrique du véhicule. Selon la figure 3, l'intercalaire 2 est pris en sandwich entre l'électrode 1 et la plaque 3. L'électrode 1 comprend une partie plane et une partie courbée. La partie plane de l'électrode 1 est en contact électrique avec les sommets 9 de l'intercalaire 2.

L'électrode 1, sous la forme de la bande métallique 12, présente à une extrémité une languette 7. Reliée à la bande métallique 12 par un coude 8, la languette 7 est elle-même prise en sandwich par la terminaison 4. Préférentiellement, la languette 7 est disposée perpendiculairement à la bande métallique 12 puisque le coude 8 forme un angle de 90°définissant ainsi une forme avantageuse d'un « L ».

La terminaison 4, de préférence en aluminium, comprend une connectique 11 plane pour la connexion au réseau électrique du véhicule et un bras 13 assurant le contact. De réalisation préférentielle, le bras 13 est en forme de « U » enserrant la languette 7 de l'électrode 1. La connexion mécanique entre la languette 7 et le bras 13 est la partie du barreau conducteur de chaleur 5 qui est reçue à l'intérieur d'un moyen de positionnement non représenté.

La figure 4a représente l'autre extrémité du barreau conducteur de chaleur 5 qui se trouve à l'opposé de l'extrémité présentée à la figure 3. Selon la figure 4a, l'intercalaire 2 est pris en sandwich entre l'électrode 1 et la plaque 3. Les sommets 9 de la feuille métallique ondulée formant l'intercalaire 2 sont en contact direct avec, alternativement l'électrode 1 et la plaque 3. L'électrode 1 présente une deuxième languette 7 reliée à la bande métallique 12 par un coude 8. Par ailleurs, la plaque 3 est terminée par une borne 14 coudée. La borne 14 est disposée avantageusement perpendiculairement à la plaque 3 de sorte à s'étendre selon une direction parallèle à la direction de la languette 7. Un intervalle 15 sépare la languette 7 de la borne 14 afin d'interdire la continuité électrique entre l'électrode 1 et la plaque 3.

La figure 4b représente une vue de détail de la structure de l'intercalaire 2, recouvert de part et d'autre de la feuille métallique par une couche de revêtement isolant 19 de préférence en silicone ou en polyester.

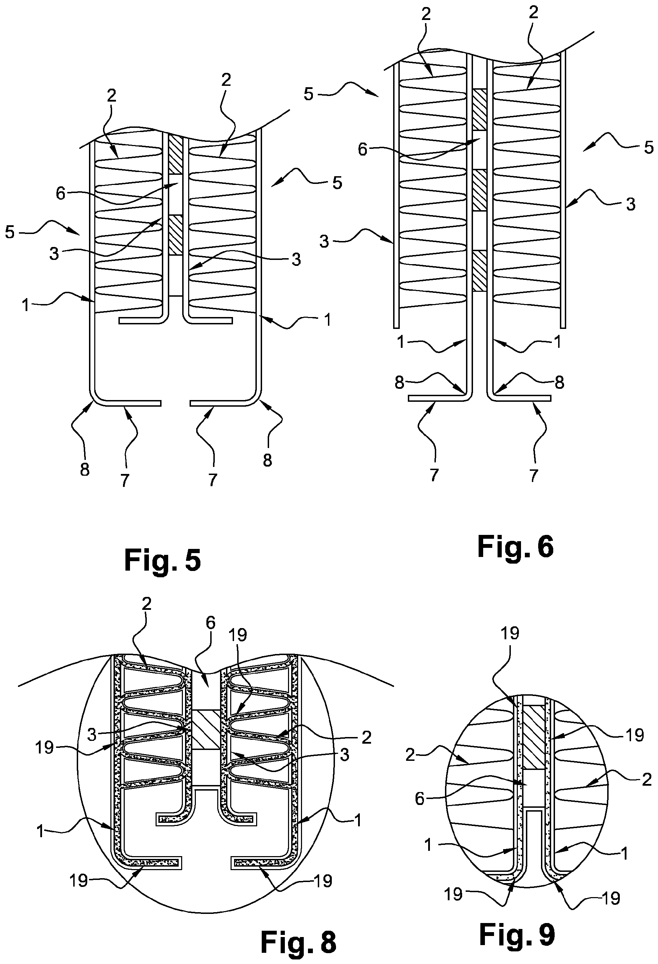

La figure 5 représente le module de chauffe dans un premier mode de réalisation. L'élément résistant 6 est collé au barreau conducteur de chaleur 5 du coté où se situe la plaque 3. La plaque 3 se situe à l'intérieur du module de chauffe 100 et l'électrode 1 se situe à l'extérieur du module de chauffe 100. L'élément résistant 6 peut être, de manière avantageuse, intercalé avec un élément isolant 19. De manière préférentielle, l'électrode 1 et la plaque 3 présentent en leurs extrémités des courbures. L'élément résistant 6, les plaques 3 et les intercalaires 2 sont pris en sandwich entre les électrodes 1.

La figure 6 représente le module de chauffe dans un deuxième mode de réalisation. L'élément résistant 6, est collé au barreau conducteur de chaleur 5 du coté où se situe l'électrode 1. L'électrode 1 se situe à l'intérieur du module 100 et la plaque 3 se situe à l'extérieur du module 100. L'élément résistant 6 peut être de manière avantageuse, intercalé avec un élément isolant. De manière préférentielle, l'électrode 1 et la plaque 3 présentent en leurs extrémités des courbures. L'élément résistant 6, les électrodes 1 et les intercalaires 2 sont pris en sandwich entre les plaques 3.

Comme le montre la figure 7, le dispositif de chauffage additionnel 10 comprend un cadre 18, par exemple en plastique, dans lequel est logé une pluralité de modules de chauffe 100. Les modules de chauffe 100 sont disposés parallèlement les uns aux autres et s'étendent sur toute la longueur du cadre 18, de manière à être exposés directement à l'air traversant le cadre 18. Dans l'exemple non limitatif de la figure 7, le dispositif de chauffage additionnel 10 comporte trois modules de chauffe 100.

La figure 9 représente une vue de détail de la figure 6 illustrant le module de chauffe dans le deuxième mode de réalisation. Selon le deuxième mode de réalisation, la plaque 3 et l'élément résistant 6 sont respectivement recouverts du revêtement isolant 19, de préférence en silicone ou en polyester. Avantageusement, l'épaisseur de la couche de revêtement isolant 19 est compris entre 20 et 120µm. Selon le deuxième mode de réalisation, le collage entre la plaque 3 et l'élément résistant 6 se fera avant le dépôt du revêtement isolant 19.

La figure 8 représente une vue de détail de la figure 5 illustrant le module de chauffe dans le premier mode de réalisation. Selon le premier mode de réalisation, l'électrode 1, l'intercalaire 2, la plaque 3 et l'élément résistant 6 sont respectivement recouverts du revêtement isolant 19, de préférence en silicone ou en polyester. Avantageusement, l'épaisseur de la couche de revêtement isolant 19 est compris entre 20 et 120µm. Selon le premier mode de réalisation, le collage entre la plaque 3 et l'élément résistant 6 se fera avant le dépôt du revêtement isolant 19,

De plus, selon les deux modes de réalisation, l'assemblage entre l'électrode 1 et la connectique 11 se fera également avant le dépôt de la couche d'isolant 19. Cependant, la connectique 11 n'est pas recouverte par le revêtement isolant 19.

## Revendications

1. Module de chauffe (100) d'un dispositif de chauffage additionnel (10) destiné à chauffer un flux d'air, comportant au moins un barreau conducteur de chaleur (5) contre lequel est disposé au moins une résistance électrique (6),
le barreau conducteur de chaleur (5) étant partiellement isolé électriquement par un revêtement isolant le au moins un barreau conducteur de chaleur (5) étant constitué d'au moins un intercalaire (2) disposé entre, d'une part, une connectique (11) et/ou une électrode (1) et, d'autre part, une plaque (3), la résistance (6) étant disposée contre ladite plaque (3), ledit module étant **caractérisé en ce que** l'électrode (1 la résistance (6), ainsi que soit l'au moins un intercalaire (2) et/ou la plaque (3) sont isolés électriquement par un revêtement isolant (19).

2. Module de chauffe (100) selon la revendication 1, **caractérisé en ce que** la résistance électrique (6) est constituée par au moins une résistance à coefficient de température positif.

3. Module de chauffe (100) selon l'une des revendications 1 ou 2, **caractérisé en ce que** l'électrode (1) est en contact direct avec la connectique (11).

4. Module de chauffe (100) selon l'une quelconque des revendications 1 à 3, **caractérisé en ce que** les intercalaires (2), la connectique (11) et l'électrode (1) sont en aluminium.

5. Module de chauffe (100) selon l'une quelconque des revendications 1 à 4, **caractérisé en ce que** l'électrode (1) et les intercalaires (2) et/ou la résistance (6) sont assembiés entre eux par un matériau adhésif conducteur de type colle conductrice.

6. Module de chauffe (100) selon l'une quelconque des revendications précédentes, **caractérisé en ce que** le revêtement isolant (18) est en polyester.

7. Module de chauffe (100) selon la revendication 6, **caractérisé en ce que** le revêtement isolant (19) est compris entre une épaisseur de 20 à 120 µm.

8. Dispositif de chauffage additionnel (10), **caractérisé en ce qu'**il comporte au moins un module de chauffe (100) selon l'une des revendications précédentes.

## Patentansprüche

1. Heizmodul (100) einer Zusatzheizvorrichtung (10), das dazu bestimmt ist, einen Luftstrom zu erwärmen, das mindestens einen Wärmeleitstab (5) aufweist, gegen den mindestens ein elektrischer Widerstand (6) angeordnet ist,
wobei der Wärmeleitstab (5) teilweise durch eine Isolierverkleidung (19) elektrisch isoliert ist, wobei der mindestens eine Wärmeleitstab (5) aus mindestens einem Zwischenstück (2) besteht, das zwischen einerseits einer Anschlusseinrichtung (11) und/oder einer Elektrode (1) und andererseits einer Platte (3) angeordnet ist, wobei der Widerstand (6) gegen die Platte (3) angeordnet ist, wobei das Modul **dadurch gekennzeichnet ist, dass** die Elektrode (1), der Widerstand (6), sowie entweder das mindestens eine Zwischenstück (2) und/oder die Platte (3) durch eine Isolierverkleidung (19) elektrisch isoliert sind.

2. Heizmodul (100) nach Anspruch 1, **dadurch gekennzeichnet, dass** der elektrische Widerstand (6) aus mindestens einem Widerstand mit positivem Temperaturkoeffizienten besteht.

3. Heizmodul (100) nach einem der Ansprüche 1 oder 2, **dadurch gekennzeichnet, dass** die Elektrode (1) mit der Anschlusseinrichtung (11) in direktem Kontakt ist.

4. Heizmodul (100) nach einem der Ansprüche 1 bis 3, **dadurch gekennzeichnet, dass** die Zwischenstücke (2), die Anschlusseinrichtung (11) und die Elektrode (1) aus Aluminium sind.

5. Heizmodul (100) nach einem der Ansprüche 1 bis 4, **dadurch gekennzeichnet, dass** die Elektrode (1) und die Zwischenstücke (2) und/oder der Widerstand (6) durch einen leitenden Klebstoff von der Art leitender Kleber zusammengebaut werden.

6. Heizmodul (100) nach einem der vorhergehenden Ansprüche, **dadurch gekennzeichnet, dass** die Isolierverkleidung (18) aus Polyester ist.

7. Heizmodul (100) nach Anspruch 6, **dadurch gekennzeichnet, dass** die Isolierverkleidung (19) zwischen einer Dicke von 20 bis 120 µm liegt.

8. Zusatzheizvorrichtung (10), **dadurch gekennzeichnet, dass** sie mindestens ein Heizmodul (100) nach einem der vorhergehenden Ansprüche aufweist.

## Claims

1. Heating module (100) of a supplemental heating device (10) intended to heat an airflow, comprising at least one heat-conductive bar (5) against which at least one electrical resistor (6) is disposed, the heat-conductive bar (5) being partially electrically insulated by an insulating coating, the at least one heat-conductive bar (5) being constituted by at least one insert (2) disposed between, on the one hand, a connector (11) and/or an electrode (1) and, on the other hand, a plate (3), the resistor (6) being disposed against said plate (3), said module being **characterized in that** the electrode (1), the resistor (6) as well as either the at least one insert (2) and/or the plate (3) are electrically insulated by an insulating coating (19).

2. Heating module (100) according to Claim 1, **characterized in that** the electrical resistor (6) is constituted by at least one resistor having a positive temperature coefficient.

3. Heating module (100) according to either of Claims 1 and 2, **characterized in that** the electrode (1) is in direct contact with the connector (11).

4. Heating module (100) according to any one of Claims 1 to 3, **characterized in that** the inserts (2), the connector (11) and the electrode (1) are made of aluminum.

5. Heating module (100) according to any one of Claims 1 to 4, **characterized in that** the electrode (1) and the inserts (2) and/or the resistor (6) are assembled with each other by a conductive adhesive material of the conductive glue type.

6. Heating module (100) according to any one of the preceding claims, **characterized in that** the insulating coating (19) is made of polyester.

7. Heating module (100) according to Claim 6, **characterized in that** the insulating coating (19) has a thickness of between 20 and 120 µm.

8. Supplemental heating device (10), **characterized in that** it comprises at least one heating module (100) according to one of the preceding claims.
